**Europäisches Patentamt**

(19) **European Patent Office**

**Office européen des brevets**

(11) Veröffentlichungsnummer: **0 233 354**
**B1**

(12) # EUROPÄISCHE PATENTSCHRIFT

(45) Veröffentlichungstag der Patentschrift:
**14.06.89**

(51) Int. Cl.⁴: **B60K 20/12**, G05G 5/06

(21) Anmeldenummer: **86117556.0**

(22) Anmeldetag: **17.12.86**

(54) Schaltvorrichtung für Wechselgetriebe von Kraftfahrzeugen.

(30) Prioritat: **24.01.86 DE 3602157**

(43) Veröffentlichungstag der Anmeldung:
**26.08.87 Patentblatt 87/35**

(45) Bekanntmachung des Hinweises auf die Patenterteilung:
**14.06.89 Patentblatt 89/24**

(84) Benannte Vertragsstaaten:
**DE ES FR GB IT SE**

(56) Entgegenhaltungen:
EP-A- 0 058 965
DE-A- 1 755 732
DE-A- 3 228 790
DE-B- 1 680 046
DE-C- 3 003 076
DE-C- 3 245 529

(73) Patentinhaber: **FORD-WERKE AKTIENGESELLSCHAFT,**
**Werk Köln-Niehl Henry-Ford-Strasse Postfach 60 40 02,**
**D-5000 Köln 60(DE)**

(84) Benannte Vertragsstaaten: **DE IT SE**

(73) Patentinhaber: **FORD MOTOR COMPANY LIMITED,**
**Eagle Way, Brentwood Essex CM13 3BW(GB)**

(84) Benannte Vertragsstaaten: **GB**

(73) Patentinhaber: **FORD FRANCE SOCIETE ANONYME,**
**344 Avenue Napoléon Bonaparte B.P. 307, F-92506 Rueil**
**Malmaison Cedex(FR)**

(84) Benannte Vertragsstaaten: **FR**

(73) Patentinhaber: **Ford Motor Company, One Parklane**
**Boulevard Parklane Towers East, Dearborn**
**Michigan 48126(US)**

(84) Benannte Vertragsstaaten: **ES**

(72) Erfinder: **Schneider, Josef, Matthiasstrasse 30,**
**D-5047 Wesseling-Berzdorf(DE)**

(74) Vertreter: **Ritzkowsky, Harald, Dipl.-Ing., Ford-Werke**
**Aktiengesellschaft Patentabteilung NH/DRP**
**Henry-Ford-Strasse, D-5000 Köln 60(DE)**

## Beschreibung

Die Erfindung geht aus von einer Schaltvorrichtung für Wechselgetriebe von Kraftfahrzeugen der im Oberbegriff des Patentanspruchs 1 erläuterten Art.

Aus der DE-C 30 03 076 ist eine Schaltvorrichtung für Wechselgetriebe von Kraftfahrzeugen der im Oberbegriff des Patentanspruchs 1 erläuterten Art bekannt.

Bei dieser bekannten Schaltvorrichtung wird ein auf der Schaltwelle über seine Nabe befestigter Schaltfinger von der Nabe einer auf der Schaltwelle geführten Sperrplatte umfaßt. Eine an sich erforderliche federbelastete Rasteinrichtung zum Festlegen der Gangschaltstellungen ist hierbei weder gezeigt noch erläutert.

In herkömmlicher Weise ist jedoch eine solche federbelastete Rasteinrichtung durch Rasten an der Schaltwelle gebildet, die mit einer in einer Bohrung im Getriebegehäuse angeordneten Feder-Kugel-Raste zusammenwirken.

Die Anordnung einer solchen federbelasteten Rasteinrichtung getrennt von der Schalt- und Sperrvorrichtung der Schaltvorrichtung, weist den Nachteil auf, daß sich durch bei der Fertigung und bei der Montage ergebenden Toleranzsummierungen erhebliche Abweichungen ergeben können, die dazu führen, daß die durch die federbelastete Rasteinrichtung bestimmten Gangschaltstellungen nicht mit den tatsächlichen Gangschaltstellungen der Schaltglieder übereinstimmt.

Aus der DE-C 32 45 529 ist eine Schaltvorrichtung für Wechselgetriebe von Kraftfahrzeugen bekannt, bei der eine Schaltwelle zur Vorwahl von Schaltgassen axial verschoben und zum Einrücken von Gängen radial verschwenkt wird. Bei dieser bekannten Schaltvorrichtung wird zur Vermei dung von Toleranzproblemen vorgeschlagen, die federbelastete Rasteinrichtung zwischen dem radial verschwenkbaren Schaltfinger und dem gegen radiales Verschwenken festgelegten Sperrblech anzuordnen. Die federbelastete Rasteinrichtung besteht hierbei aus einer die Schaltwelle umfassenden Schraubendruckfeder, die auf einem Arretierring einwirkt, der eine Kugel drehbar gelagert aufnimmt, die mit entsprechenden Rastmulden im Sperrblech zusammenwirkt. Diese federbelastete Rasteinrichtung ist daher verhältnismäßig aufwendig im Aufbau und schwierig in der Montage.

Aus der DE-B 16 80 046 ist eine Schaltvorrichtung für Wechselgetriebe von Kraftfahrzeugen bekannt, bei der eine Schaltwelle zur Vorwahl von Schaltgassen axial verschiebbar und zum Einrücken von Gängen radial verschwenkbar ist. Bei dieser Schaltvorrichtung wird zur Vereinfachung der Montage eine federbelastete Rasteinrichtung zwischen dem radial verschwenkbaren Schaltfinger und dem radial festgelegten Sperrblech angeordnet. Der Schaltfinger ist hierbei mit einem Zylinderansatz zur Aufnahme einer Feder-Kugel-Raste versehen, die mit entsprechenden Rastmulden in einem mit dem Sperrblech verbundenen Einsatzstück zusammenwirken. Die Rastmulden müssen sich hierbei über den axialen Weg der Schaltwelle erstrecken, der für die Vorwahl der Schaltgasse erforderlich ist. Dementsprechend ist der Bauaufwand für diese federbelastete Rasteinrichtung verhältnismäßig groß.

Die Aufgabe der Erfindung ist es, an einer Schaltvorrichtung für Wechselgetriebe von Kraftfahrzeugen der im Oberbegriff des Patentanspruchs 1 erläuterten Art eine federbelastete Rasteinrichtung zum Festlegen der Gangschaltstellung vorzusehen, die einerseits Toleranzprobleme vermeidet und die andererseits mit einem Minimum an Bau- und Montageaufwand zusätzlich noch eine Schaltbegrenzung bzw. eine Sperrplattenfestlegung und Schaltbegrenzung bereitstellen kann.

Gemäß der Erfindung wird diese Aufgabe gelöst, indem eine Schaltvorrichtung gemäß dem Oberbegriff des Patentanspruchs 1 die im Kennzeichenteil des Patentanspruchs 1 aufgezeigten Merkmale aufweist.

In den Ansprüchen 1 und 2 sind weitere zweckmässige Maßnahmen der Erfindung erläutert.

Dadurch, daß die Sperrplattennabe die Schaltfingernabe in bekannter Weise umfaßt und an der Sperrplattennabe ein Zylinderansatz zur Aufnahme einer Feder-Kugel-Raste vorgesehen ist und in der Schaltfingernabe entsprechende gegenüberliegende Rastmulden ausgebildet sind, wird die Anordnung der Schalt-Sperr- und Rasteinrichtung so eng zusammengefaßt, daß Schwierigkeiten durch Toleranzsummierungen mehrerer Bauteile vermieden werden und der bauliche Aufwand verringert und die Montage erleichtert wird.

Dadurch, daß in der Schaltfingernabe ein Axialschlitz vorgesehen ist, dem gegenüberliegend in der Sperrplattennabe eine Bohrung mit einem eingesetzten, sich radial nach Innen in den Axialschlitz erstreckenden Stift angeordnet ist, kann eine Schaltwegberenzung bereitgestellt werden.

Dadurch, daß in der Schaltfingernabe eine Rechte/öffnung vorgesehen ist, oberhalb der in der Sperrplattennabe ein in Umfangsrichtung verlaufender Sperrschlitz angeordnet ist und ein im Getriebegehäuse befestigter Sperrbolzen mit seinem Stiftende radial sowohl durch den Sperrschlitz als auch durch die Rechteköffnung erstreckt, wird mit geringstem Aufwand die Festlegung der Sperrplatte als auch eine Schaltbegrenzung erzielt.

Die Erfindung wird anhand eines in der Zeichnung gezeigten Ausführungsbeispieles näher erläutert.

Es zeigt:

Fig. 1 einen vertikalen Teilschnitt durch eine Schalt- und Sperrvorrichtung mit der erfindungsgemäßen federbelasteten Rasteinrichtung;

Fig. 2 eine Ansicht in Richtung des Pfeile II in Fig. 1;

Fig. 3 einen Schnitt entlang der Linie III - III in Fig. 1 und

Fig. 4 einen vertikalen Teilschnitt ähnlich Fig. 1 durch eine erweiterte Ausführungsform der Erfindung.

Wie aus den Figuren zu ersehen ist, ist auf einer Schaltwelle 1 ein Schaltfinger 2 mit seiner Nabe 3 axial und radial fest befestigt, was durch einen in gestrichelten Linien angedeuteten Sicherungsstift 4 erfolgen kann.

Eine Sperrplatte 5 ist mit einer Nabe 6 ausgebildet, die die Nabe 3 des Schaltfingers 2 umfaßt. Die Nabe 6 der Sperrplatte 5 ist hierbei mit einem axialen Schlitz 7 versehen, der eine axiale Relativbewegung des Schaltfingers 2 gegenüber der Sperrplatte 5 ermöglicht, die über einen im Getriebegehäuse 8 befestigten Schraubenbolzen 9, dessen Stiftende in eine in der Sperrplattennabe 6 in Umfangsrichtung verlaufende Nut 10 einragt, axial festgelegt ist.

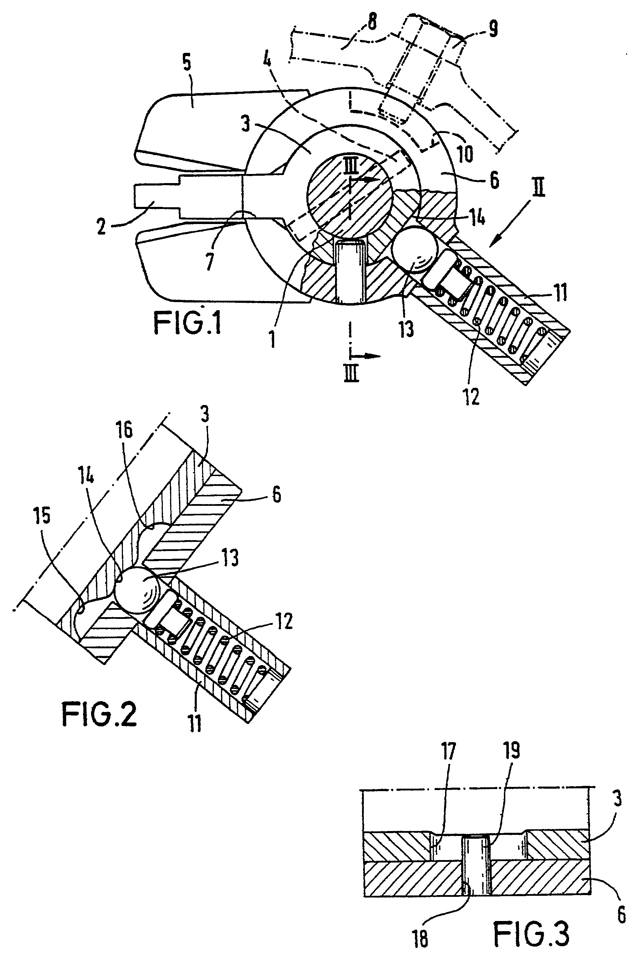

An der Nabe 6 der Sperrplatte 5 ist ein Zylinderansatz 11 angeordnet, der zur Aufnahme einer Feder-Kugel-Raste 12/13 vorgesehen ist. An der Nabe 3 des Schaltfingers 2 sind entsprechende, gegenüberliegende Rastmulden 14, 15 und 16 ausgebildet. Die Rastmulde 14 legt hierbei die Neutralstellung fest, während die Rastmulden 15 und 16 die entsprechenden Gangschaltstellungen festlegen. Siehe Fig. 2.

Zusätzlich zu dieser federbelasteten Rasteinrichtung, die die Gangschaltstellungen festlegt, kann eine Überschaltsicherung vorgesehen werden, wie sie aus Fig. 1 in Verbindung mit Fig. 3 zu ersehen ist. Die Nabe 3 des Schaltfingers 2 ist hierbei mit einem axialen Schlitz 17 versehen und die Nabe 6 der Sperrplatte 5 ist mit einer entsprechend gegenüberliegenden Bohrung 18 versehen, in der ein Stift 19 engepreßt aufgenommen wird. Die Länge des Schlitzes 17 im Zusammenwirken mit dem Stift 16 begrenzt die maximal mögliche axiale Bewegung des Schaltfingers 2 und der mit diesem verbundenen Schaltwelle 1.

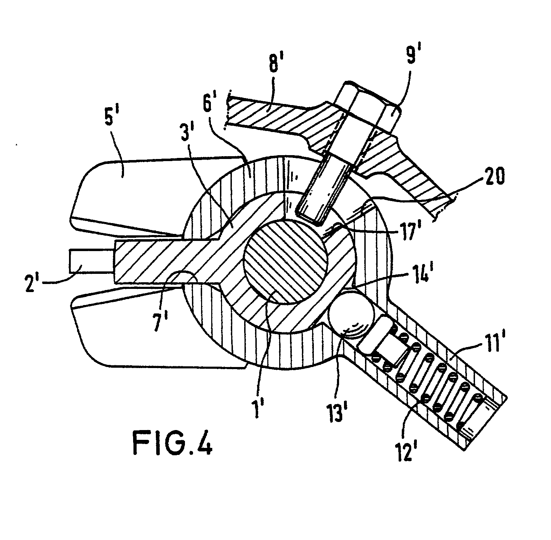

In Fig. 4 ist eine weitere Ausführungsform der Erfindung erläutert, in der für mit in den Figuren 1 bis 3 übereinstimmenden Bauteilen die gleichen nur mit einem Strich-Index versehenen Bezugszeichen verwendet wurden.

Die Ausführungsform nach Fig. 4 ist gegenüber der Ausführungsform nach den Figuren 1 bis 3 dadurch weiter vereinfacht, in dem die Sperrplattenfestlegung mit der Schaltbegrenzung zusammengefaßt wird.

Die Schaltfingernabe 3' ist hierzu mit einer Rechtecköffnung 17' von einer Erstreckung in Umfangsrichtung und in Axialrichtung von der Länge der Vorwahlwege bzw. der Schaltwege versehen ist, oberhalb der in der Sperrplattennabe 6' ein in Umfangsrichtung verlaufender Sperrschlitz 20 angeordnet ist, dessen Erstreckung in Umfangsrichtung dem Vorwählweg entspricht und wobei im Getriebegehäuse 8' ein Sperrbolzen 9' befestigt ist, dessen verlängertes Stiftende sich sowohl radial durch den Sperrschlitz 20 als auch in die Rechtecköffnung 17' hinein erstreckt.

Die Sperrplatte 5' kann somit bei einer Vorwahlbewegung der Schaltwelle 1' im benötigten Umfang radial verschwenkt werden, wird jedoch durch den Sperrbolzen 9' in Verbindung mit dem Sperrschlitz 20 an einer axialen Bewegung gehindert. Die axiale Bewegung der Schaltwelle 1' mit dem Schaltfinger 2' wird hierbei jedoch über die Rechtecköffnung 17' ermöglicht.

Bei entsprechend ausreichenden Vorwahlwegen und Schaltwegen kann eventuell die Rechtecköffnung in der Schaltfingernabe entsprechend einer Schaltkulisse ausgeführt werden, über die die Bewegungen der Schaltwelle noch zusätzlich geführt werden können.

## Patentansprüche

1. Schaltvorrichtung für Wechselgetriebe von Kraftfahrzeugen mit einer zur Vorwahl von Schaltgassen drehbaren und zum Einrücken von Gängen axial verschiebbaren Schaltwelle (1), an der ein Schaltfinger (2) über seine Nabe (3) befestigt ist und wobei der Schaltfinger (2) wahlweise in Eingriff mit Nuten an Schaltarmen von auf der Schaltwelle geführten Schaltgabeln bringbar ist, um eine Schaltgabel auszuwählen, und eine auf der Schaltwelle (1) geführte Sperrplatte (5) radial verschwenkbar, jedoch axial festgelegt ist, um die nicht ausgewählten Schaltgabeln gegen eine Schaltbewegung zu sperren, wobei die Sperrplattennabe (6) die Schaltfingernabe (3) umfaßt, dadurch gekennzeichnet, daß an der Sperrplattennabe (6) ein Zylinderansatz (11) zur Aufnahme einer Feder-Kugel-Raste (12/13) vorgesehen ist und in der Schaltfingernabe (3) entsprechende gegenüberliegende Rastmulden (14, 15 und 16) ausgebildet sind.

2. Schaltvorrichtung nach Anspruch 1, dadurch gekennzeichnet, daß in der Schaltfingernabe (3) ein Axialschlitz (17) vorgesehen ist, dem gegenüberliegend in der Sperrplattennabe (6) eine Bohrung (18) angeordnet ist, die einen sich radialen nach Innen erstreckenden Stift (19) aufnimmt, der in den axialen Schlitz (17) eine Schaltbewegung begrenzend einragt.

3. Schaltvorrichtung nach Anspruch 1, dadurch gekennzeichnet, daß in der Schaltfingernabe (3') eine Rechtecköffnung (17') vorgesehen ist, oberhalb der in der Sperrplattennabe (6') ein in Umfangsrichtung verlaufender Sperrschlitz (20) angeordnet ist und im Getriebegehäuse (8') ein Sperrbolzen (9') mit einem Stiftende angeordnet ist, das sich radial sowohl durch den Sperrschlitz (20) als auch in die Rechtecköffnung (17') hinein erstreckt.

## Claims

1. A gear-shift apparatus for transmissions of motor vehicles, having a selector shaft (1), which is rotatable for preselecting gear-shift channels and axially displaceable for engaging gear speeds and on which a gear-shift finger (2) is secured by way of its hub (3), the gear-shift finger (2) being selectively engageable with grooves on selector arms of gear-shift forks guided on the selector shaft, in order to select a gear-shift fork, and a check plate (5) which is guided on the selector shaft (1) being radially pivotable but axially fixed, in order to prevent the gear-shift forks not selected from making a gear-shift movement, the check plate hub (6) embracing the gear-shift finger hub (3), characterized in that a cylindrical extension (11) for receiving a spring-loaded ball catch (12/13) is provided on the check plate hub (6) and corresponding catch recesses (14, 15 and 16) opposite are formed in the gear-shift finger hub (3).

2. A gear-shift apparatus according to Claim 1, characterized in that an axial slot (17), opposite which a bore (18) is formed in the check plate hub (6), is provided in the gear-shift finger hub (3), the bore (18) receiving a radial pin (19) which extends towards the inside and which projects into the axial slot (17) so as to limit a gear-shifting movement.

3. A gear-shift apparatus according to Claim 1, characterized in that a rectangular opening (17'), above which a locking slot (20) extending in the peripheral direction is formed in the check plate hub (6'), is provided in the gear-shift finger hub (3'), and a locking bolt (9') with a pin end, which extends both radially through the locking slot (20) and into the rectangular opening (17'), is disposed in the transmission casing (8').

**Revendications**

1. Dispositif de manœuvre de boîtes de vitesse de véhicules automobiles comportant un arbre de manœuvre (1) pouvant tourner pour la sélection de voies de manœuvre, et se déplacer axialement pour l'accrochage des vitesses, sur lequel est fixé un doigt de manœuvre (2), par son moyeu (3), et dans lequel le doigt de manœuvre (2) peut être amené au choix en prise avec des rainures pratiquées dans des bras de manœuvre de fourches de manœuvre guidée sur l'arbre de manœuvre, afin de sélectionner une fourche de manœuvre, et dans lequel une plaque d'arrêt (5) guidée sur l'arbre de manœuvre (1) peut pivoter radialement, mais est fixée axialement, afin d'interdire aux fourches de manœuvre non sélectionnées un déplacement de manœuvre, le moyeu (6) de la plaque d'arrêt entourant le moyeu (3) du doigt de manœuvre, caractérisé en ce qu'un bout de cylindre (11) est prévu sur le moyeu (6) de la plaque d'arrêt, pour recevoir un dispositif d'encliquetage à ressort et bille (12/13), et des enfoncements d'encliquetage (14, 15, 16) correspondants, opposés, sont formés dans le moyeu (3) du doigt de manœuvre.

2. Dispositif de manœuvre selon la revendication 1, caractérisé en ce qu'une fente axiale (17) est prévue dans le moyeu (3) du doigt de manœuvre, en ce qu'un perçage (18) est pratiqué en vis-à-vis dans le moyeu (6) de la plaque d'arrêt, lequel reçoit une goupille (19) radiale, s'étendant vers l'intérieur, qui pénètre dans la fente (17) axiale, en limitant le déplacement de manœuvre.

3. Dispositif de manœuvre selon la revendication 1, caractérisé en ce qu'il est prévu dans le moyeu (3') du doigt de manœuvre, une ouverture rectangulaire (17') au-dessus de laquelle une fente d'arrêt (20) est pratiquée sur le pourtour du moyeu (6) de la plaque d'arrêt, et un bulon d'arrêt (9') est placé dans la boîte de vitesses (8'), bulon dont l'extrémité de la tige traverse radialement la fente d'arrêt (20) et pénètre dans l'ouverture rectangulaire (17').

EP 0 233 354 B1

FIG.1

FIG.2

FIG.3

FIG.4